# EUROPÄISCHE PATENTANMELDUNG

(11) **EP 4 331 833 A1**
(43) Veröffentlichungstag der Anmeldung: **06.03.2024**
(21) Anmeldenummer: 22192803.9
(22) Anmeldetag: 30.08.2022
(51) Int. Cl.: B32B 7/12, B32B 9/00, B32B 9/04, E04C 1/40, E04C 2/04, E04B 2/02, E04C 2/00

(54) **AUF EINEM VERDICHTETEN BETONSOCKEL KLEBEVERBUNDEN AUFSITZENDES PLATTEN-TEIL, EINE ANZAHL VON ZEHN ODER MEHR SERIENMÄSSIG HERGESTELLTEN BETONSOCKELN MIT DARAUF AUFSITZENDEN, KLEBEVERBUNDENEN PLATTENTEILEN SOWIE VERFAHREN ZU DEREN HERSTELLUNG**

(71) Anmelder: Ger van Ommeren Beheer B.V., 5961NT Horst (NL)
(72) Erfinder:
(74) Vertreter: Müller, Enno

(57) **Zusammenfassung**

Die Erfindung betrifft ein auf einem verdichteten Betonsockel (2) klebeverbunden aufsitzendes Plattenteil (1). Um eine vorteilhaftes, auf einem Betonsockel aufsitzendes, mit diesem klebeverbundenes Plattenteil anzugeben, wird vorgeschlagen, dass der Betonsockel (2) eine Dichte von 0,8 kg/dm³ oder mehr aufweist, wobei die Klebstofflage (10) eine Menge von 400g/m² oder mehr, bis hin zu 1300 g/m², aufweist und wobei weiter der Klebstoff silanmodifiziert ist. Weiter betrifft die Erfindung eine Anzahl (A) von zehn oder mehr serienmäßig hergestellten Betonsockeln (2) mit darauf aufsitzenden, klebeverbundenen Plattenteilen (1). Zudem betrifft die Erfindung ein Verfahren zur Herstellung eines mit einem Plattenteil (1) klebeverbundenen Betonsockels (2), wobei zunächst der Betonsockel (2) mit einer Oberseite (3), einer Unterseite und Randseiten (4) hergestellt wird, sodann auf die Oberseite (3) des Betonsockels (2) Klebstoff aufgebracht wird und hiernach das Plattenteil (1) zentriert auf den Betonsockel (2) aufgesetzt wird, wobei eine individuelle Zentrierung jedes Plattenteils (1) an jedem Betonsockel (2) vorgenommen wird.

## Beschreibung

### Gebiet der Technik

Die Erfindung betrifft zunächst ein auf einem verdichteten Betonsockel klebeverbunden aufsitzendes Plattenteil.

Weiter betrifft die Erfindung eine Anzahl von zehn oder mehr serienmäßig hergestellten Betonsockeln mit darauf aufsitzenden, klebeverbundenen Plattenteilen.

Auch betrifft die Erfindung ein Verfahren zur Herstellung eines mit einem Plattenteil klebeverbundenen Betonsockels, wobei zunächst der Betonsockel mit einer Oberseite, einer Unterseite und Randseiten hergestellt wird, sodann auf die Oberseite des Betonsockels Klebstoff aufgebracht wird und hiernach das Plattenteil zentriert auf den Betonsockel aufgesetzt wird, wobei eine individuelle Zentrierung jedes Plattenteils an jedem Betonsockel vorgenommen wird.

### Stand der Technik

Plattenteile, insbesondere solche, die klebeverbunden auf einem Betonsockel aufsitzen, sind bekannt. Diese finden beispielsweise Verwendung bei der Erstellung von Terrassenböden oder dergleichen. Das Plattenteil bildet hierbei die sichtbare und entsprechend begehbare oder befahrbare Oberfläche, beispielsweise Terrassenfläche.

Bekannt ist in diesem Zusammenhang eine auf einem verdichteten Betonsockel klebeverbunden aufsitzende Keramikplatte sowie ein Verfahren zur Herstellung, bei welchem die Keramikplatte mit dem Betonsockel klebeverbunden wird, beispielsweise aus der DE 10 2017 111 248 A1. Hieraus ist es weiter bekannt, auf der der späteren Oberseite zugewandten Oberfläche des hergestellten und verdichteten Betonsockels einen Klebstoff aufzubringen, wonach die Keramikplatte auf die Klebstofffläche aufgesetzt und bevorzugt unter Druckeinwirkung mit dem Betonsockel verhaftet wird.

### Zusammenfassung der Erfindung

Im Hinblick auf den vorbeschriebenen Stand der Technik stellt sich der Erfindung die Aufgabe, ein vorteilhaftes, auf einem Betonsockel aufsitzendes, mit diesem klebeverbundenes Plattenteil anzugeben und auch ein vorteilhaftes Herstellungsverfahren für den Verbund eines Plattenteils mit einem Betonsockel. Darüber hinaus stellt sich die Aufgabe, eine fertigungstechnisch günstige Herstellung einer serienmäßigen Anzahl von zehn oder mehr Betonsockeln mit darauf aufsitzenden, klebeverbundenen Plattenteilen anzugeben.

Eine mögliche Lösung der Aufgabe ist nach einem ersten Erfindungsgedanken bei einem Betonsockel mit einem klebeverbundenen Plattenteil gegeben, bei welchem darauf abgestellt ist, dass der Betonsockel eine Dichte von 0,8 kg/dm³ oder mehr aufweist, wobei die Klebstofflage eine Menge von 400 g/m² oder mehr, beispielsweise bis hin zu 1300 g/m², aufweist und wobei der Klebstoff silanmodifiziert ist.

Es handelt sich um einen automatisiert hergestellten verdichteten Betonsockel mit Plattenteil, wobei die automatisierte Herstellung beginnt mit der Herstellung des Betonsockels als solchem und endet mit dem letztlichen Aufbringen des Plattenteils und gegebenenfalls Andrücken des Plattenteils. Der verdichtete Betonsockel mit dem Plattenteil kann ohne einen individuellen Arbeitsgang, der von menschlicher Hand oder individuell gesteuert durchzuführen wäre, hergestellt werden. Eine mögliche Herstellung ist nachstehend auch noch in weiterer Einzelheit erläutert.

Hinsichtlich der Herstellung einer Anzahl von zehn oder mehr Betonsockeln mit Plattenteilen wird zur Lösung der Aufgabe vorgeschlagen, dass das Plattenteil relativ zu dem Betonsockel derart zentriert ist, dass bei allen genannten serienmäßig hergestellten Betonsockeln mit darauf aufsitzenden, klebeverbundenen Plattenteilen ein rechtwinkliger Abstand zwischen den Randkanten der Plattenteile und der Betonsockel 2/10 mm nicht übersteigt.

Auch hierbei handelt es sich, in gleicher Weise wie vorstehend im Hinblick auf einen mit einem Plattenteil klebeverbundenen Betonsockel erläutert, um ein automatisches Herstellungsverfahren ohne Eingriff eines Menschen im Hinblick auf einen individualisierten Arbeitsvorgang.

Verfahrensmäßig ist die Aufgabe gemäß einem weiteren Erfindungsgedanken dadurch gelöst, dass das Plattenteil mit einem Handhabungsautomaten erfasst wird, derart, dass eine zentrierte Ausrichtung des Plattenteils zu einer Halterungsvorrichtung des Handhabungsautomaten erreicht ist, dass der Betonsockel auf einer verfahrbaren Aufnahmeplatte an einem vorbestimmten Ort der Aufnahmeplatte gebildet wird, dass die Aufnahmeplatte mit dem Betonsockel in eine Montagestellung verfahren wird, in welcher das Plattenteil auf den Betonsockel aufgesetzt wird, und dass weiter die Halterungsvorrichtung des Handhabungsautomaten vor dem Aufsetzen des Plattenteils an der tatsächlichen Position des jeweiligen Betonsockels ausgerichtet wird.

Auch hierbei handelt es sich, in gleicher Weise wie vorstehend im Hinblick auf einen mit einem Plattenteil klebeverbundenen Betonsockel erläutert, um ein automatisches Herstellungsverfahren ohne Eingriff eines Menschen im Hinblick auf einen individualisierten Arbeitsvorgang.

Der Betonsockel mit klebeverbundenem Plattenteil in einer der hier auch in weiterer Einzelheit beschriebenen Ausführungsformen und/oder die Anzahl von zehn oder mehr Betonsockeln mit Plattenteilen in einer der hier beschriebenen Ausführungsformen kann insbesondere unter Zuhilfenahme eines Verfahrens zur Herstellung eines mit einem Plattenteil klebeverbundenen Betonsockels in einer der hier beschriebenen Ausgestaltungen hergestellt sein.

Bei dem verwendeten Klebstoff kann es sich entsprechend um einen sogenannten SMP- oder MS-Polymer-Klebstoff handeln, welcher im Wesentlichen als Grundstoff ein silanmodifiziertes Polymer aufweist. Dabei handelt es sich weiter bevorzugt um einen Einkomponenten-Klebstoff, wobei die eingesetzten Polymere zumeist aus einem Polyether mit silanisierten Endgruppen bestehen.

Dabei handelt es sich weiter um einen Butadien- und / oder Polyurethan-freien Klebstoff mit einer relativen Dichte von beispielsweise etwa 1,4 bis 1,75 g/cm³, weiter bevorzugt etwa 1,5 bis 1,65 kg/cm³, und einer möglichen Zugfestigkeit nach ISO 37 im ausgehärteten Zustand von beispielsweise etwa 2 bis 3,5 MPa (beziehungsweise N/mm²), weiter bevorzugt etwa 2,5 MPa (beziehungsweise N/m²).

Silanbasierte oder silanmodifizierte Klebstoffe weisen eine hohe Temperaturbeständigkeit von -40C° bis zu 120C° und eine gute Haftung sowohl auf glatten als auch auf porösen Oberflächen auf.

In einer möglichen Ausgestaltung ist eine Klebstoff-Rezeptur vorgesehen, die sich im Wesentlichen wie folgt zusammensetzen kann (in Gew-% - bevorzugte Werte/Wertebereiche in Klammern):

| | |
|---|---|
| Polymer (beispielsweise Polyether) | 15 bis 50 |
| Füllstoff (beispielsweise Calciumcarbonat, Blähglas o.a.) | 30 bis 60 |
| Vinyltrimethoxysilan (oder auch bezeichnet als Trimethoxyvinylsilan) | 0,5 bis 5 (1 bis 2,5) |
| UV-Stabilisator | 0 bis 2 (0,1 bis 1) |
| Ethylester (beispielsweise Tetraethylsilikat) weitere Zusatzstoffe (beispielsweise Verdünnungsmittel, | 0 bis 2 (0,1 bis 1) |
| Haftvermittler, Katalysatoren und/oder Färbemittel) | 2 bis 20 |

Der Betonsockel liegt bevorzugt mit einer vergleichsweise hohen Dichte vor. Diese beträgt bevorzugt mehr als 0,8 kg/dm³ bis hin zu beispielsweise 2,7 kg/dm³ oder mehr, weiter bevorzugt etwa 0,8 bis 2 kg/dm³ bei sogenannten Leichtbetonen und etwa 2,6 kg/dm³ oder mehr bei sogenannten Schwerbetonen, wobei die hierbei gegebene hohe Dichte durch Verwendung einer relativ schweren Gesteinskörnung, wie beispielsweise bestehend aus oder zumindest einen wesentlichen Anteil enthaltend von Magnetit, Eisenerz, Schwerspat oder Baryt, erreicht sein kann. Auch ist diesbezüglich ein sogenannter Normalbeton mit einer Dichte von etwa 2 bis 2,6 kg/dm³ möglich.

Die Verdichtung kann beispielsweise durch eine Klopfeinrichtung erreicht sein. Alternativ kann auch eine Rütteleinrichtung oder eine Vibrationsverdichtung vorgesehen sein.

Grundsätzlich kann der verwendete Beton ein geschlossenporiger Beton sein. Alternativ kann auch ein offenporiger Beton Verwendung finden, so dass der hergestellte Betonsockel eine gewisse Porosität aufweisen kann.

In einer möglichen Ausgestaltung ist eine Betonrezeptur vorgesehen, die sich allein bzgl. der Feststoffanteile wie folgt zusammensetzen kann (in Massenprozent (M-%) - bevorzugte Werte/Wertebereiche in Klammern):

| | | |
|---|---|---|
| Zement der Festigkeitsklasse | 8 bis 13 | (ca. 11) |
| Füller | 2 bis 3 | (ca. 2,5) |
| Sand mit einer Körnung 0/2 | 40 bis 45 | (ca. 43) |
| Kies mit einer Körnung 2/8 | 20 bis 30 | (ca. 26) |
| Steinschlag mit einer Körnung 2/8 | 15 bis 20 | (ca. 17,5) |
| Wasserzementwert | 0,3 bis 0,4 | (ca. 0,38) |

Die bevorzugte Klebstoffmenge von 400 g/m² oder mehr bezieht sich bevorzugt auf den Moment des Klebstoffauftrags, d.h. unter Nichtberücksichtigung einer gegebenenfalls hiernach, auch im Zuge des Trocknungsvorganges, einsetzenden Gewichtsminderung, etwa durch Dampfdiffusion. In vorteilhafter Weise ist durch die Verwendung eines silanmodifizierten Klebstoffs eine Volumenveränderung nach Aushärtung von bevorzugt weniger als 3% festzustellen.

Hinsichtlich des Wasserzementwertes kann auch eine über Vorstehendes hinausgehende Bandbreite gegeben sein. Der untere Wert kann auch beispielsweise bis zu 0,25 reichen und der obere Wert bis hin zu 0,65.

Im Zuge der Herstellung weist der zunächst erstellte Betonsockel im Moment des Aufbringens der Klebstofflage bevorzugt noch einen Feuchtegehalt von 3,4 M-% (Massenprozent) oder mehr bis hin zu 4,0 M-% auf. Die entsprechend noch gegebene (Rest-) Feuchte des Betons trägt in vorteilhafter Weise zur günstigen Abbindung der Klebstofflage bei. Die Aushärtung eines silanmodifizierten Klebstoffs, wie dieser erfindungsgemäß zur Anwendung kommt, wird durch die bevorzugt vorliegende Feuchtigkeit, unter Freisetzung von Alkohol (Methanol), in positiver Weise unterstützt.

Es ist verfahrensmäßig eine unmittelbare, den genannten Feuchtegehalt allein durch die zuvor erfolgte Herstellung des Betonsockels erreichen lassende Aufeinanderfolge der Herstellungsschritte "Herstellen des Betonsockels", "Aufbringen des Klebstoffes auf den Betonsockel" und "Aufsetzen des Plattenteils" bevorzugt. Alternativ oder ergänzend kann auch eine Befeuchtung an der entsprechenden Oberfläche des Betonsockels vor dem Aufbringen des Klebstoffes vorgesehen sein. Die Befeuchtung kann beispielsweise mittels Besprühens mit Wasser erfolgen.

Die Erstellung des Betonsockels ist zunächst unabhängig von dem Plattenteil vornehmbar, kann entsprechend in einem üblichen Herstellungsprozess, wie dies beispielsweise bei Pflastersteinen oder dergleichen bekannt ist, erfolgen. Auf einer Oberseite des Betonsockels wird die Klebstofflage aufgebracht, insbesondere mit einer Menge von etwa 400 g/m² oder mehr, weiter beispielsweise bis hin zu 1300 g/m², weiter bevorzugt 500 bis 1200 g/m², im Moment des Auftrages.

Der Betonsockel ist bevorzugt ein kubischer Körper, mit einer rechteckigen Grundfläche. Bevorzugt sind Betonsockel, die entsprechende Langund Schmalseiten aufweisen. Es kann sich aber auch um eine quadratische Grundfläche handeln. Weiter weist der Betonsockel eine maßlich mit der Grundfläche im Wesentlichen übereinstimmende und in der Draufsicht im Wesentlichen deckungsgleiche Oberseite auf. Weiter weist der Betonsockel die Grundfläche und die Oberseite verbindende Randflächen auf. Im Hinblick auf die angegebene im Wesentlichen Übereinstimmung können an den Randflächen auch Abstandsvorsprünge ausgebildet sein. Die Randflächen sind als im Wesentlichen senkrechte Flächen gebildet. Eine Höhe der Randflächen, die umlaufend bevorzugt dieselbe ist, ist weiter bevorzugt 1/20 bis 1/10 der Länge einer Randkante der Grundfläche beziehungsweise der Oberseite. Die Grundfläche weist entsprechend vier Längskanten auf.

Der Klebstoffauftrag kann raupenartig erfolgen, wobei im Moment des Auftrags zwischen den Raupen in einer Richtung quer zur Raupen-Längserstreckung ein Abstand eingehalten sein kann. Weiter kann insgesamt auf der Betonsockel-Oberfläche der Klebstoff mäander-raupenförmig aufgetragen werden. Bevorzugt ist eine jedenfalls umfangsmäßig, zugeordnet den Randseiten, geschlossene Klebstofflage, zumindest dann, wenn letztlich das Plattenteil aufgebracht und gegebenenfalls nochmals angedrückt ist. Hierbei kann auch einem Auftrag von jeweils einer einzelnen linearen Kleberaupe, die zugeordnet einer Randseite an ihrem Anfang und ihrem Ende eine randseitenparallele Abwinklung aufweist, ausgegangen werden und durch das gemeinsame oder nachfolgende Auftragen mehrerer derartiger Klebstoffraupen die geschlossene Form erreicht werden.

Das Plattenteil ist bei der Herstellung einer Anzahl von zehn oder mehr, weiter beispielsweise bis hin zu zwanzig oder fünfzig oder mehr, Betonsockeln mit darauf aufsitzenden und klebeverbundenen Plattenteilen bei allen hergestellten Betonsockeln derselben Anzahl so angeordnet und ausgerichtet, dass sich insgesamt ein gleichmäßiges Verlegebild der mit den Plattenteilen versehenen Betonsockel dieser Anzahl erreichen lässt.

Dabei ist auch durch das vorgeschlagene Herstellungsverfahren erreicht, dass die Randkanten der Plattenteile bei im Wesentlichen paralleler Ausrichtung zu den Randkanten des jeweils zugordneten Betonsockels in einem rechtwinklig zum Verlauf der Randkanten betrachteten Abstand von höchstens 2/10 mm zu den Betonsockel-Randkanten verlaufen. Dieser Maximal-Abstand ist bei allen mit Plattenteilen versehenen Betonsockeln dieser gewählten Anzahl eingehalten.

Bevorzugt ist diesbezüglich ein Abstand von weniger als 2/10 mm, weiter bevorzugt von weniger als 1,5/10 oder weniger als 1/10 mm.

Dabei ist die Randkante des Betonsockels grundsätzlich nach außen zu der Randkante des Plattenteils beabstandet, so dass das Plattenteil nicht über die Sockel-Randkante überstehen kann.

Zur Herstellung kann ein Handhabungsautomat, beispielsweise ein Industrieroboter, zur Anwendung kommen, mittels welchem insbesondere eine individuelle Zentrierung und Anordnung eines jeden Plattenteils auf dem zugeordneten Betonsockel erreichbar ist.

Der Betonsockel kann, wie bevorzugt, auf einer verfahrbaren Aufnahmeplatte und an einem vorbestimmten Ort auf der Aufnahmeplatte hergestellt (gegossen und verdichtet) werden. Nach Herstellung des Betonsockels kann dieser mittels der Aufnahmeplatte in eine Position verbracht werden, in welcher nach Auftrag der Klebestofflage unter Nutzung des Handhabungsautomaten das zugehörige Plattenteil aufgesetzt werden kann.

Die Aufnahmeplatte hat eine für den Handhabungsautomaten bekannte Größe. Sie hat weiter bevorzugt einen rechteckigen Grundriss. Die Aufnahmeplatte wird weiter auf einem vorgegebenen und dem Handhabungsautomaten auch bekannten Weg verfahren. Es kann ein Verfahren auf Schienen vorliegen oder entlang einer genauen, bevorzugt linearen Führung. Die Aufnahmeplatte wird zur Aufbringung des Plattenteils auf einen Betonsockel an einer vorbestimmten Stelle eines Verfahrweges angehalten. Auf eine Aufnahmeplatte sind bevorzugt mehrere, beispielsweise zwei, vier, sechs oder mehr, Betonsockel aufgebracht. Wenn auch die Betonsockel auf der Aufnahmeplatte auf grundsätzlich vorgegebenen Flächen gebildet werden, kann sich doch eine Lagedifferenz zu der vom Handhabungsautomaten erwarteten Lage eines Betonsockels ergeben, die durch verschiedene Ursachen bedingt sein kann. Einerseits kann die Aufnahmeplatte nicht exakt an dem vorbestimmten Ort gestoppt sein, andererseits kann beispielsweise bei der Bildung des Betonsockels eine leichte Relativverschiebung zu der Aufnahmeplatte eingetreten sein. Hieraus ergibt sich das Bedürfnis, gleichwohl zu einer zentrierten Ausrichtung des Plattenteils relativ zu dem Betonsockel in jedem Einzelfall zu kommen.

Der Handhabungsautomat weist in vorteilhafter Weise eine Halterungsvorrichtung auf, die bevorzugt zusammen mit dem daran gehaltenen und aufzusetzenden Plattenteil relativ zu dem Handhabungsautomaten als solchen ausrichtbar ist, womit eine individuelle und exakte Ausrichtung des Plattenteils zu dem Betonsockel erreichbar ist. Selbst in dem Fall, dass beispielsweise der Betonsockel nicht exakt auf der Aufnahmeplatte positioniert ist, so beispielsweise gegenüber einer Sollposition um wenige Millimeter verschoben und / oder um wenige Winkelgrade um eine Vertikalachse verdreht, ist durch das vorgeschlagene Verfahren eine zentrierte Anordnung des Plattenteils auf der Oberseite des Betonsockels ermöglicht.

Der Handhabungsautomat beziehungsweise die Halterungsvorrichtung ist zur Erfassung der exakten Position des Betonsockels und zur angepassten Ausrichtung der Halterungsvorrichtung mit dem Plattenteil ausgelegt.

Zunächst wird das Plattenteil durch die Halterungsvorrichtung aufgenommen. Hierzu wird das Plattenteil an einem bestimmten Ort und einer bestimmten Ausrichtung zur Erfassung durch den Handhabungsautomaten bereitgehalten. Der Ort kann insbesondere eine Zentrierungslehre aufweisen, in welche das Plattenteil hineingelegt wird, die sich beispielsweise an zwei Randkanten des Plattenteiles orientieren kann. Somit ist jedenfalls bezüglich beispielsweise dieser beiden Randkanten eine definierte Lage des Plattenteils für den Handhabungsautomaten gegeben. Aufgrund der definierten Lage der beispielsweise genannten beiden Randkanten ergibt sich unmittelbar auch die definierte Lage bezüglich der beiden weiteren Randkanten. Eine solche Zentrierungslehre kann weiter bevorzugt auf einer schräg zu einer Horizontalen verlaufenden Fläche gebildet sein. Eine Senkrechte der Fläche schließt entsprechend mit einer Vertikalen einen spitzen Winkel ein. So kann die Platte durch Gewichtskraft unterstützt in der Zentrierungslehre einliegen.

Weitere Merkmale der Erfindung sind nachstehend, auch in der Figurenbeschreibung, oftmals in ihrer bevorzugten Zuordnung zum Gegenstand des Anspruches 1 und/oder eines oder mehrerer der weiteren unabhängigen Ansprüche oder zu Merkmalen weiterer Ansprüche erläutert. Sie können aber auch in einer Zuordnung zu nur einzelnen Merkmalen des Anspruches 1 und/oder eines oder mehrerer der weiteren unabhängigen Ansprüche oder des jeweiligen weiteren Anspruches oder jeweils unabhängig von Bedeutung sein.

Vorzugsweise ist die Klebstofflage rundum geschlossen ausgebildet, jedenfalls in ihrer randäußersten Lage. Sie ist so nah am Rand gebildet, dass sich auch nach der bevorzugt weiter vorgenommenen Druckbeaufschlagung des aufgelegten Plattenteils kein Herausquetschen von Klebstoff über den Rand hinaus ergibt. Die eventuell nicht vollständig mit Klebstoff bedeckten Flächenbereiche sind so bevorzugt zu einem mittleren Bereich der Fläche hin vorgesehen.

Die Klebstofflage kann, insbesondere in dem ausgehärteten Zustand, die von dem Plattenteil auf dem Betonsockel überdeckte Fläche zu etwa 80% oder 85% oder mehr bedecken. Es können sich entsprechend durchaus auch im Nutzungszustand eines mit einem Plattenteil versehenen Betonsockels in der Ebene des Klebstoffauftrags klebstofffreie Bereiche mit einem Flächenanteil von 20% oder weniger ergeben.

Dabei kann die Klebstofflage im ausgehärteten Zustand und somit im üblichen Nutzungszustand des mit dem Plattenteil versehenen Betonsockels eine senkrecht zu der Flächenerstreckung der Klebstofflage oder der Sichtlage des Plattenteils betrachtete Dicke von weniger als 5 mm bis hin zu 0,5 mm aufweisen. Bevorzugt ist ein Bereich zwischen 0,5 mm und 2 mm, weiter bevorzugt zwischen 1,0 mm und 1,5 mm. Es kann auch gegeben sein, dass die Dicke über die Fläche, die verklebt ist, unterschiedlich ist. Am Rand kann eine geringere Dicke gegeben sein als in einem mittleren Bereich der Fläche. Somit kann gegebenenfalls eine gewisse Schüsselung der keramischen Platte Berücksichtigung finden. Die Dicke kann in Abhängigkeit von der Oberflächenbeschaffenheit des Betonsockels, also auch von der Art des Betons abhängig (Leicht-, Normal- oder Schwerbeton), wie auch von der der Klebstofflage zugewandten Unterfläche des Plattenteils über die gesamte Klebefläche betrachtet variieren. So kann beispielsweise partiell eine Dicke der Klebstofflage von beispielsweise 4,8 mm gegeben sein, im einem anderen Flächenbereich eine Dicke von beispielsweise nur 2,3 oder 3,4 mm, wiederum an anderer Stelle eine Dicke von beispielsweise 1,3 oder 4,5 mm. Darüber hinaus können sich sogar Dicken ergeben, die Null oder nahezu Null sind, insbesondere in Bereichen, in denen aufgrund der jeweiligen Oberflächenbeschaffenheiten die Sockel-Oberseite und die Plattenteil-Unterseite partiell unmittelbar aneinander anliegen können. Zudem kann die Dicke der Klebstofflage Null oder nahezu Null sein in Bereichen, in denen weder Klebstoff auf die Sockel-Oberseite aufgetragen ist, noch in denen sich Klebstoff im Zuge des Aufsetzens des Plattenteils hinein verteilt hat, in welchen Bereichen sich somit durchaus auch klebstofffreie Hohlräume ergeben können.

Das Plattenteil kann aus einem keramischen Werkstoff bestehen, alternativ aus einem Kunststoffwerkstoff, wie beispielsweise einem Vinyl-Kunststoff oder einem PVC-Kunststoff. Kunststoff-Plattenteile erweisen sich dabei dahingehend als günstig, als dass bei diesen die überdeckte Fläche der Klebstofflage gegenüber einer Verklebung von Keramik-Plattenteilen geringer ausfallen kann. Durch die hohe Stabilität der Kunststoff-Plattenteile auch bei einem üblichen Verlegen der damit versehenen Betonsockel, bei welchem Verlegen durchaus auch mit einem Gummihammer oder ähnlichem schlagend über das Plattenteil auf den Betonsockel eingewirkt wird, führen vergleichsweise größere klebstofffreie Bereiche zwischen Plattenteil und Betonsockel nicht zu Rissbildungen in dem Plattenteil.

Bei Ausbildung des Plattenteils als Keramikplatte kann diese eine unterseitige Struktur aufweisen, beispielsweise eine rippenartig verlaufende Struktur oder auch eine kreuzförmige Rippenstruktur. Die zugeordnete Oberseite des Betonsockels ist bevorzugt ohne Abformung dieser Struktur gebildet. Es ergibt sich in bevorzugter Ausgestaltung allein bedingt durch das Herstellungsverfahren keine oder praktisch keine der möglichen strukturierten Unterseite des Plattenteils angepasste Negativstruktur der zugewandten Betonsockel-Oberseite. Die Klebstofflage ist bevorzugt mit einer solchen Dicke gebildet, dass sich die angepasste Negativstruktur nicht ergibt.

Auch kann bevorzugt eine Spaltzugfestigkeit nach DIN EU 1339 zwischen dem Betonsockel und dem Plattenteil von etwa 4 N/mm² oder größer gegeben sein. In bevorzugter Ausgestaltung kann die Spaltzugfestigkeit bis hin zu etwa 7 N/mm² betragen, weiter bevorzugt etwa 6 N/mm².

Weiter kann der Betonsockel bei einem Aufbringen der Klebstofflage auf seiner die Klebstofflage empfangenen Oberseite bereits eine teilweise Abbindung aufweisen, während darunterliegende Bereiche des Betonsockels weniger oder noch nicht abgebunden sind. Es kann sich entsprechend auf der die Klebstofflage empfangenen Oberseite eine Verhautung zufolge teilweiser Abbindung ergeben, so dass sich eine stabilere, festere Unterlage als bei frisch geformten Beton für den Klebstoff und das aufgesetzte Plattenteil ergibt. Dies hilft, die nicht gewünschte Abformung einer gegebenenfalls unterseitig an dem Plattenteil ausgebildeten Strukturierung in dem Beton zu vermeiden. Die unter der Verhautung liegenden Bereiche sind in bevorzugter Ausgestaltung zumindest soweit abgebunden, dass sich eine für die weitere Verarbeitung, wie Auftrag der Klebstofflage und Aufsetzen des Plattenteils, ausreichende Stabilität des Betonsockels ergibt.

Der Klebstoff kann, wie bevorzugt, in pastös-standfester Konsistenz aufgebracht werden. Es kann diesbezüglich ein gelartiger Klebstoff vorliegen, der gegebenenfalls erst mit Aufsetzen des Plattenteils durch die hierbei einwirkende Gewichtskraft des Plattenteils (gegebenenfalls gleichmäßig) auf der Oberseite des Betonsockels verteilt wird. Der frisch aufgebrachte Klebstoff verläuft bevorzugt nicht.

Nach dem Aufsetzen des Plattenteils kann des Weiteren ein Andrücken an den Betonsockel vorgenommen werden. Hierbei wird das Plattenteil mit einem vorgegebenen Anpressdruck in Richtung auf die mit der Klebstofflage versehenen Oberseite des Betonsockels belastet, um so die Klebewirkung weiter zu erhöhen. Diese Druckeinwirkung kann unmittelbar nach Aufsetzen des Plattenteils auf die Klebstofflage erfolgen. Bevorzugt wird die Aufnahmeplatte mit dem Betonsockel und darauf aufliegenden Plattenteilen in eine weitere Station verfahren, in der das Andrücken vorgenommen wird.

Auch kann die Druckeinwirkung durch beispielsweise Überfahren der Plattenteil-Oberseite mittels einer Andruckrolle erfolgen.

Die hierbei aufgebrachte Kraft zum Andrücken kann, wie bevorzugt, etwa 5.000 bis 9.000 N/m², weiter bevorzugt zwischen 7.000 und 8.000 N/m², darüber hinaus bevorzugt etwa 7.500 N/m² betragen. Die verwendete Anlage zum Andrücken kann beispielsweise eine Kraft von 120.000 bis 160.000 N aufbringen.

Die Kantenlängen der Betonsockel, wie auch der hierauf klebeverbunden aufsitzenden Plattenteile, können beispielsweise 400/800 mm, 800/800 mm, 600/600 mm oder auch 600/300 mm betragen. Auch andere, entsprechend kleinere oder auch größere, Abmessungen beziehungsweise Zwischenwerte sind diesbezüglich möglich.

Die Halterungsvorrichtung des Handhabungsautomaten kann bezüglich dessen Grundrissgestaltung angepasst sein an die Grundrissgestaltung des aufzunehmenden Plattenteils. Bei einem im Grundriss rechteckigen Plattenteil ist auch die Halterungsvorrichtung im Bereich ihrer mit dem Plattenteil zur Halterung zusammenwirkenden Halterungsfläche bevorzugt rechteckig gestaltet, wenngleich diesbezüglich durchaus ein Übermaß der Halterungsfläche gegenüber der Plattenteilfläche gegeben sein kann.

Die Halterungsvorrichtung ist gemäß einer bevorzugten Ausgestaltung als Unterdruck-Halterungsvorrichtung ausgebildet ist. Der Handhabungsautomat kann hierzu eine aktivier- beziehungsweise deaktivierbare Vakuumpumpe oder dergleichen aufweisen beziehungsweise mit einer solchen verbunden sein. In der Halterungsfläche der Halterungsvorrichtung sind Saugöffnungen vorgesehen, über welche ein Unterdruck zwischen der Halterungsvorrichtung und dem Plattenteil erreicht werden kann.

Zur exakten und individuellen Zentrierung des erfassten und gehaltenen Plattenteils relativ zu dem Betonsockel und abschließendem Absetzen auf der Klebstofflage ist die Halterungsvorrichtung auslösbar an dem Handhabungsautomaten relativ zu einem Tragkopf des Handhabungsautomaten horizontal verschiebbar und / oder um eine Vertikalachse verdrehbar. In einer Grundausrichtung, aus welcher heraus die Auslösung erfolgt, kann die Halterungsvorrichtung relativ zu dem Tragkopf festgelegt sein. Beispielsweise vor oder im Zuge der Ausrichtung der Halterungsvorrichtung zur zentrierenden Anpassung ist diese Festlegung gelöst.

Die mögliche lineare Verlagerbarkeit der Halterungsvorrichtung gegenüber dem Tragkopf kann aus einer Grundstellung heraus wenige Millimeter betragen, so beispielsweise bis hin zu 20 mm oder mehr, beispielsweise bis hin zu 30 oder 40 mm. Mit Bezug auf einen Querschnitt durch den Handhabungsautomaten, in welchem Querschnitt sich die Vertikalachse als Linie darstellt, kann sich - ausgehend von der Grundstellung - ein Neigungswinkel einer Anlageebene der Halterungsvorrichtung, an welcher das Plattenteil zum Transport zur Anlage kommt, gegenüber einer quer zu der Vertikalachse verlaufenden Ebene des Tragkopfs von wenigen Winkelgraden ergeben, so beispielweise bis hin zu 5 Grad oder mehr, weiter beispielsweise bis hin zu 10 oder 20 Grad.

Zur Ausrichtung der Halterungsvorrichtung und des daran angeordneten Plattenteils können an oder zugeordnet der Halterungsvorrichtung zwei sich gegenüberliegende Zentrierungsleisten angebracht sein. Die Halterungsvorrichtung kann mit Hilfe der Zentrierungsleisten, wenn die Halterungsvorrichtung hierzu innerhalb des Handhabungsautomaten zur Bewegungsmöglichkeit gelöst ist, verschoben werden, gegebenenfalls auch verdreht werden in einer horizontalen Ebene. Hierzu sind die Zentrierungsleisten hinsichtlich einer Gegenkraft an der Halterungsvorrichtung abgestützt beziehungsweise befestigt.

Die Halterungsleisten können finger- oder tasterartig die jeweils zugeordnete Randkante des Betonsockels überfangen. Die Zentrierungsleisten sind bevorzugt synchron aufeinander zu bewegbar, sodass bei ausgelöster Verschiebbarkeit und / oder Verdrehbarkeit durch Anlage der Zentrierungsleisten an einer oder beiden Randseiten des Betonsockels die Ausrichtung der Halterungsvorrichtung zusammen mit dem Plattenteil an der tatsächlichen Position des Betonsockels vorgenommen werden kann. Unter Abstützung beispielsweise an einer Sockel-Randseite kann sich zufolge der synchronen Einwärtsbewegung der Zentrierungsleisten die Halterungsvorrichtung zusammen mit dem Plattenteil in die korrekte Zentrierposition ziehen.

Bevorzugt sind zwei Paare solcher Zentrierungsleisten vorgesehen, die weiter bevorzugt senkrecht zueinander bewegbar sind. Mittel dieser Paare an Zentrierungsleisten können alle vier Randseiten des Betonsockels erfasst beziehungsweise ertastet werden. Ein bevorzugt motorisch unterstütztes Aufeinanderzubewegen der jeweiligen Zentrierungsleisten eines Paares führt bei entsprechender Randseiten-Anlage zum selbsttätigen zentrierten Ausrichten der Halterungsvorrichtung mit dem gehaltenen Plattenteil.

Eine solche Zentrierung mittels Halterungsleisten wird auch bevorzugt zweifach vorgenommen. Ein erstes Mal, wenn das Plattenteil noch an dem Handhabungsautomaten gehaltert ist durch die beschriebene Verlagerung der Halterungsvorrichtung gegenüber dem Tragkopf, also zusammen mit dem Plattenteil und darüber hinaus ein zweites Mal, nachdem das Plattenteil auf den Betonsockel beziehungsweise die Klebelage des Betonsockels aufgelegt ist und das Plattenteil von der Halterungsvorrichtung gelöst ist, aber die Halterungsleisten sich noch in entsprechender höhenmäßiger Überdeckung zu dem Betonsockel befinden.

Die vor- und nachstehend angegebenen Bereiche beziehungsweise Wertebereiche oder Mehrfachbereiche schließen hinsichtlich der Offenbarung auch sämtliche Zwischenwerte ein, insbesondere in 1/10-Schritten der jeweiligen Dimension, gegebenenfalls also auch dimensionslos. Beispielsweise beinhaltet die Angabe 400 g/m² bis 1300 g/m² auch die Offenbarung von 400,1 g/m² bis 1300 g/m², 400 g/m² bis 1299,9 g/m², 400,1 g/m² bis 1299,9 g/m² etc., die Offenbarung von etwa 4 N/mm² auch die Offenbarung von 4,1 N/mm², oder auch 3,9 N/mm², die Offenbarung von bis zu 7 N/mm² auch die Offenbarung von bis zu 6,9 N/mm² etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweilig angegebenen Bereich dienen.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in schematischer Darstellung den Ablauf eines Verfahrens zur Herstellung eines mit einem Betonsockel klebeverbundenen Plattenteils;
- Fig. 2: die Draufsicht gemäß Pfeil II in Figur 1 auf einen hergestellten Betonsockel nach Auftrag einer Klebstofflage;
- Fig. 3: in einer schematischen Draufsicht eine Station mit einem Handhabungsautomaten zum zentrierten Aufsetzen eines Plattenteils auf einen Betonsockel, eine Grundstellung betreffend;
- Fig. 4: den schematisch dargestellten Schnitt entlang der Linie IV - IV in Figur 3 durch den Handhabungsautomaten, betreffend eine Grundstellung des Automaten;
- Fig. 5: den Handhabungsautomaten in einer schematischen Schnittdarstellung quer zu der Schnittebene der Darstellung in Figur 4;
- Fig. 6: eine der Figur 3 im Wesentlichen entsprechende Darstellung, betreffend die Aufnahme eines Plattenteils durch den Handhabungsautomaten von einem Plattenteil-Vorrat;
- Fig. 7: eine Schnittdarstellung durch den Handhabungsautomaten gemäß der Darstellung in Figur 4, nach Aufnahme und einer ersten Halterung eines Plattenteils an einer Halterungsvorrichtung des Handhabungsautomaten;
- Fig. 8: eine Folgedarstellung zu Figur 6, bei Ablage des aufgenommenen Plattenteils auf einem Zentrierungspodest;
- Fig. 9: das Zentrierungspodest in einer schematischen Seitenansicht;
- Fig. 10: eine weitere Schnittdarstellung gemäß Figur 4, nach Aufnahme des Plattenteils von dem Zentrierungspodest;
- Fig. 11: eine Folgedarstellung zu Figur 8, den Aufsetzvorgang des Plattenteil auf den mit einer Klebestofflage versehenen Betonsockel;
- Fig. 12 bis 15: Abfolgedarstellungen, jeweils in einem Schnitt gemäß Figur 4, einzelne Schritte zur zentrierten Ausrichtung und Absetzen des durch den Handhabungsautomaten zentriert aufgenommenen Plattenteils auf den mit der Klebstofflage versehenen Betonsockel;
- Fig. 16: in schematischer Perspektivdarstellung einen Betonsockel mit einem darauf klebeverbunden aufsitzenden Plattenteil, eine erste Ausführungsform betreffend;
- Fig. 17: den schematischen und stark vergrößerten Schnitt entlang der Linie XVII -XVII in Figur 16;
- Fig. 18: eine schematische Darstellung gemäß Figur 16, eine zweite Ausführungsform betreffend;
- Fig. 19: in schematischer Darstellung eine aus einer unmittelbar aufeinander erfolgten Produktion herausgegriffene Anzahl an mit Plattenteilen versehenen Betonsockel.

### Beschreibung der Ausführungsformen

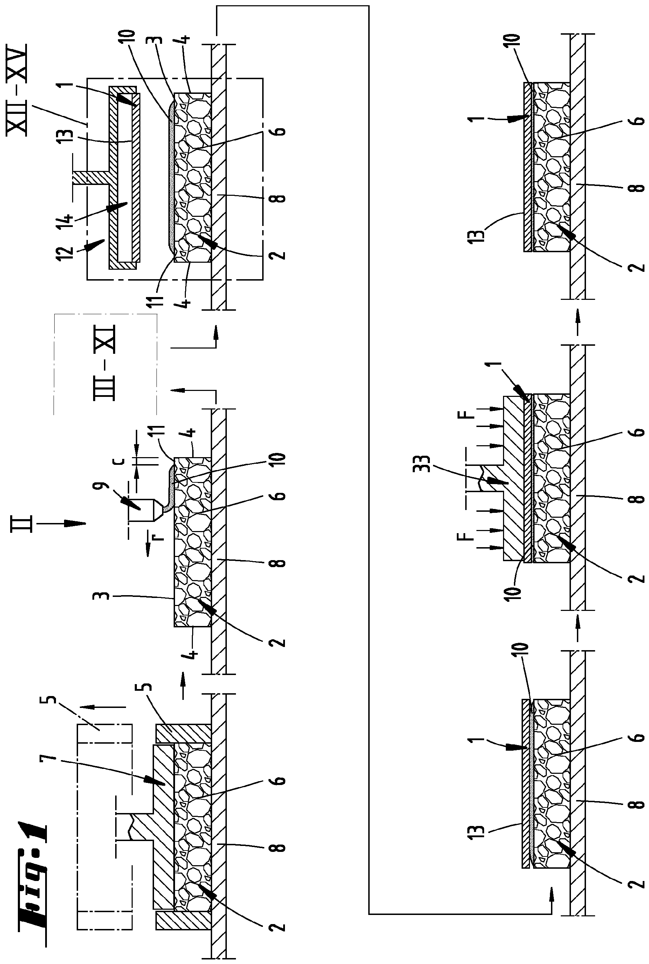

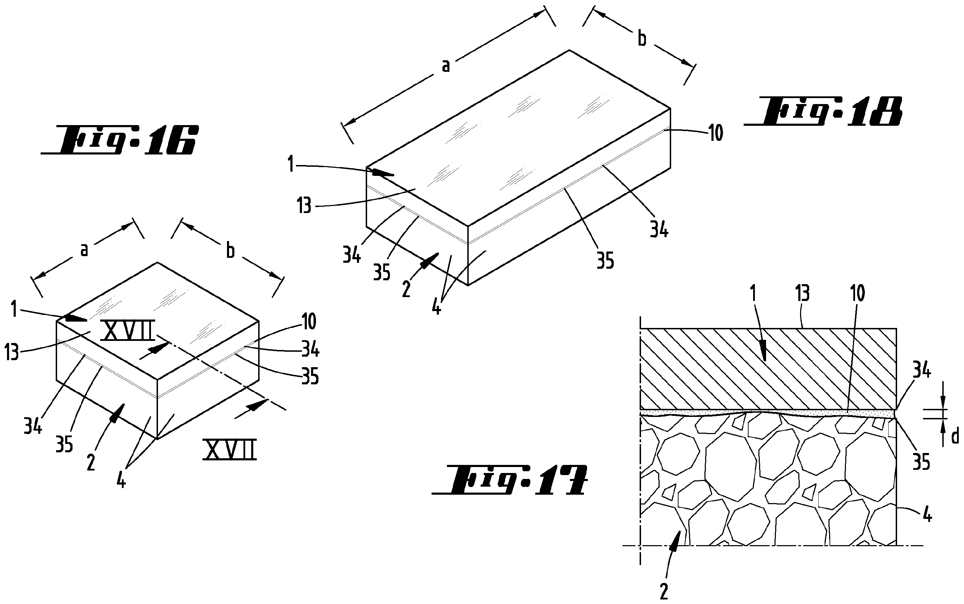

Dargestellt und beschrieben ist zunächst mit Bezug zu Figur 1 ein Verfahren zur Herstellung eines wie in den Figuren 16 und 18 beispielhaft dargestellten Betonsockels 2 mit aufgebrachten Plattenteil 1.

Das Plattenteil 1 ist aufsitzend auf dem Betonsockel 2 mit diesem klebeverbunden.

Der Betonsockel 2 weist mit Bezug auf einen Grundriss, in welchem sich eine Oberseite 3, auf welcher das Plattenteil 1 aufgesetzt wird, als Fläche darstellt, Kantenlängen auf, die im Wesentlichen den in selber Richtung betrachteten Kantenlängen des Plattenteils 1 entsprechen kann. So ergeben sich entsprechend in den Ausführungsbeispielen im Grundriss rechtwinklig zueinander verlaufende Kanten der Randseiten 4 mit einer Kantenlänge a, die der Kantenlänge b beispielsweise entsprechen kann (vgl. Figur 16), oder, gemäß dem Ausführungsbeispiel in Figur 18, etwa dem 1,5- bis 3-Fachen, weiter beispielsweise etwa dem 2- Fachen der Kantenlänge b.

Das Verfahren sieht zunächst die Herstellung des Betonsockels 2 vor, wozu Beton entsprechend einer vorgegebenen Betonrezeptur in eine formgebende Form 5 gefüllt wird. Der eingefüllte Beton 6 wird über eine beispielsweise Klopfeinrichtung 7 verdichtet. Alternativ können auch eine Rüttelverdichtung oder eine Vibrationsverdichtung, gegebenenfalls auch eine hydraulische Presse zur Verdichtung, vorgesehen sein.

Die Herstellung des Betonsockels 2 kann weiter, wie bevorzugt, auf einer verfahrbaren Aufnahmeplatte 8, insbesondere an einem vorbestimmten Ort/Flächenteil auf der Aufnahmeplatte 8, durchgeführt werden. Nach Verdichten des eingefüllten Betons 6 und einer bevorzugt teilweisen Abbindung kann zur Freilegung des Betonsockels die Form beispielsweise abgehoben werden (siehe strichpunktierte Stellung der Form in Figur 1).

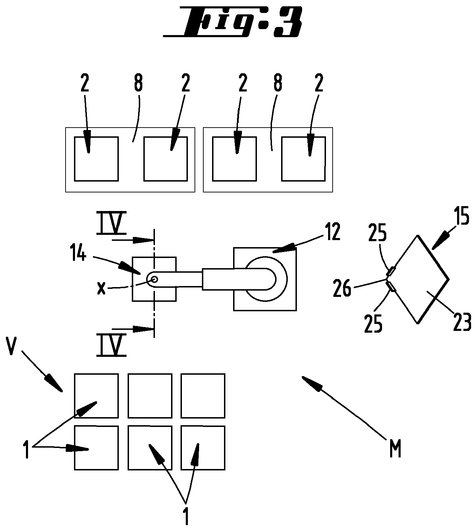

Wie schematisch beispielhaft u.a. auch in Figur 3 dargestellt, können auf einer Aufnahmeplatte 8 gegebenenfalls mehrere Betonsockel 2 an vorgegebenen Stellen auf der Aufnahmeplatte 8 hergestellt und platziert sein.

Der zumindest im Bereich der Oberseite 3 teilweise abgebundene Betonsockel 2 wird bevorzugt mittels der verlagerbaren Aufnahmeplatte 8 einer Klebstoffauftrageinrichtung 9 zugeführt.

Mittels der Klebstoffauftrageinrichtung 9 wird eine Klebstofflage 10 auf die Oberseite 3 des Betonsockels 2 aufgetragen. Bevorzugt wird ein silanbasierter beziehungsweise ein silanmodifizierter Klebstoff verwendet.

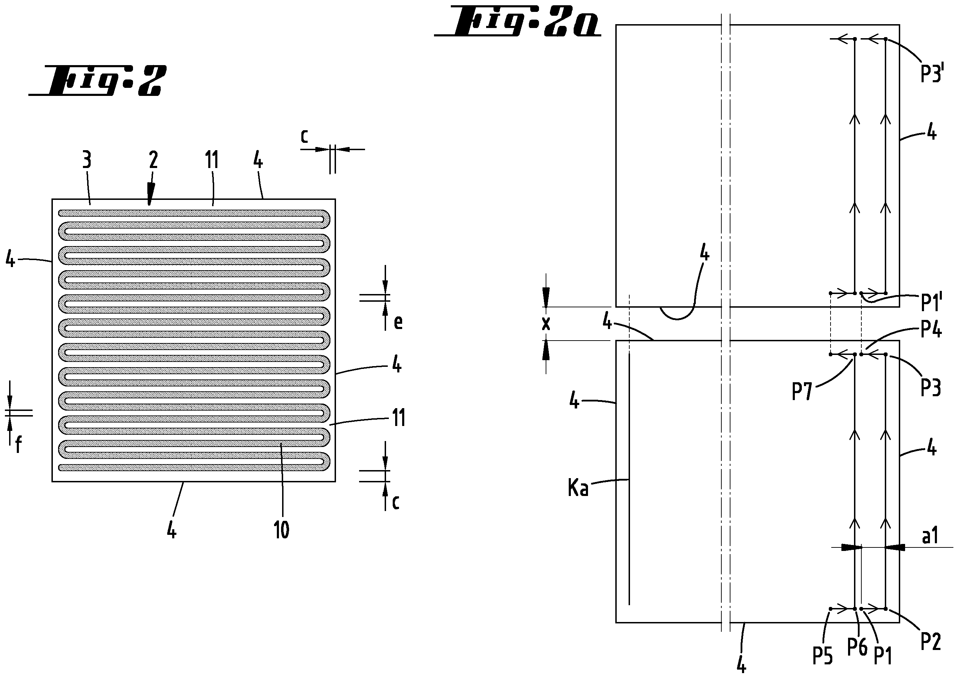

Der Klebstoffauftrag kann gemäß der schematischen Darstellung in Figur 1 über eine Düse oder dergleichen erfolgen, die, bevorzugt pastösen Klebstoff absondernd, über die Oberseite 3 bewegt wird (vgl. Figur 1, Pfeil r). Es können quer zu der Richtung r mehrere Düsen nebeneinander angeordnet sein. Bevorzugt verfährt die Düse, etwa in Zickzacklinien, ergänzend in der Richtung quer zu der Richtung r, so dass sich insgesamt ein mäanderförmiger Auftrag einer Kleberaupe ergeben kann (siehe Figur 2).

Bevorzugt ist der Klebstoff so auf die Oberseite 3 aufgetragen, dass dieser nicht gänzlich bis zu den Randkanten 35 der Randseiten 4 (zunächst) reicht. Es verbleibt nach dem Klebstoffauftrag oberseitig des Betonsockels 2 ein umlaufender Rand 11, der (zumindest zunächst) klebstofffrei ist. Dies soll ein Ausquillen von Klebstoff aus der Klebstoffebene nach außen über die Randseiten 4 des Betonsockels 2 hinaus bei einem Aufsetzen des Plattenteils 1 verhindern.

Der Rand 11 kann beispielsweise etwa eine halbe bis eine ganze Breite einer aufgetragenen Klebstoffraupe, also vor Auflegung des Plattenteils, betragen.

Weiter bevorzugt erfolgt der Klebstoffauftrag über ein, beispielsweise an einem Roboterarm, angeordnete Ventil, wobei im Randbereich des Betonsockels 2 bevorzugt ein Abstand c von beispielsweise etwa 5 mm bis hin zu etwa 10 oder 20 mm eingehalten wird.

Der bevorzugt mäanderförmig aufgetragene Klebstoff kann durchlaufend als Raupe mit einer quer zur Verfahrrichtung (Pfeil r) der Düse der Klebstoffauftragseinrichtung 9 betrachteten Breite e von beispielsweise etwa 5 bis 10 mm aufgetragen werden, wobei zwischen zwei im Wesentlichen parallel verlaufenden Kleberaupen ein in Richtung der Breite e betrachteter Abstand f verbleiben kann, der im Wesentlichen dem Maß der Breite e der Klebstoffraupe oder weniger entsprechen kann. Die Klebstofflage 10 ist ersichtlich bevorzugt als Klebstoffraupe gebildet, mit einer einer Randkante des Plattenteils im Wesentlichen entsprechenden Länge. Die Klebstoffraupen verlaufen bevorzugt über die gesamte Fläche parallel zueinander und parallel zu einer solchen Randkante. Sie sind lediglich an den Wendepunkten, zugeordnet der Randkante, zu der sie parallel laufen, rechtwinklig verlaufenden Randkante, miteinander verbunden, was sich aus einem kontinuierlichen Klebstoffauftrag heraus ergeben kann. Somit kann eine Klebstoffraupe, wie aus Figur 2 ersichtlich, nur zwei freie Enden, ein Anfangsende und ein Endende, aufweisen.

Wie weiter in Figur 2a dargestellt, kann der Klebstoff auch derart aufgetragen werden, dass er mit einer Düse der Klebstoffauftragseinrichtung 9 zugeordnet einer ersten Randseite 4 beginnend an einem Anfangspunkt P1 aufgetragen wird und hierbei zunächst, in Richtung auf eine rechtwinklig zu der ersten Randseite 4 verlaufenden zweiten Randseite 4 um eine Länge a1 verfahren wird bis zu einem Punkt P2. Weiter wird dann die Düse, bevorzugt ohne Unterbrechung, ausgehend von dem Punkt P2 unter einer Richtungsänderung von im Wesentlichen 90° parallel zu der zweiten Randkante 4 verfahren bis zu einem Punkt P3, der nahe der zu der ersten Randseite 4 gegenüberliegenden Randseite 4 sich befindet und von dort wiederum unter weiter im Wesentlichen 90° Richtungsänderung, und bevorzugt ohne Unterbrechung, bis zu einem Punkt P4. Weiter ist bevorzugt, wenn mehrere, insbesondere zwei, derartige Betonsockel auf die Aufnahmeplatte 8 in Hintereinanderanordnung vorgesehen sind, dass der Klebstoffaustrag aus der Düse für eine Verfahrstrecke, welche einem Abstand x zwischen zwei zugeordneten, und im Wesentlichen parallel zueinander verlaufenden Randseiten 4 der aufeinanderfolgenden Betonsockel entspricht, unterbrochen wird und sodann bei dem folgenden Betonsockel an einem Punkt P1' wieder ein entsprechendes Verfahren und Klebstoffauftrag aufgenommen wird.

Mittels derselben Düse kann dann ausgehend von einem Punkt P5 an dem ersten betrachteten Betonsockel der Klebstoffauftrag wieder in gleicher Weise begonnen werden, wobei ein Punkt P6 mit dem Punkt P1 und ein Punkt P7 mit dem Punkt P4 zusammenfallen kann. Es kann aber auch ein Abstand verbleiben.

Angestrebt wird, dass sich jedenfalls am Ende des Herstellungsvorgangs, bevorzugt nach dem noch erfolgenden Aufdrücken der Platte auf den Betonsockel, eine randseitig geschlossene Klebstofflage ergibt. Gewisse Abstände zwischen beispielsweise den Punkten P6 und P4 etc. kann dadurch auch hingenommen werden, dass sich bei diesem Aufdrücken eine entsprechende Vergrößerung der Klebstoffraupen in der Breite ergibt. Beispielsweise kann sich eine Vergrößerung um das Drei- bis Fünffache ergeben. Beispielsweise kann eine derartige Klebstoffraupe nach Erstauftrag eine Breite von 5 mm aufweisen und kann entsprechend beispielsweise auf bis zu 20 mm sich durch das Andrücken verbreitern.

In dieser Hinsicht kann auch eine Anordnung getroffen sein, welche im Hinblick auf den Abstand a1 letztlich eine praktisch geschlossene Klebstofflage, nach dem schließlichen Aufdrücken der Platte auf den Betonsockel, über die gesamte Fläche des Betonsockels ergibt.

Ein Randabstand der Punkte P1, P3, P5 und P7 etc. zu der zugeordneten Randseite 4 beziehungsweise die Klebstoffraupe zwischen den Punkten P2 und P3 im Abstand zu der zweiten Randseite 4 ist vorzugsweise dahingehend gewählt, dass auch nach dem genannten Aufdrücken sich kein Auspressen von Klebstoff über die Randseite 4 hinaus ergibt. In dem Beispielsfall, dass eine Vergrößerung von beispielsweise 5 mm auf 20 mm in der Breite erfolgt, ist also eine geometrische Mittellinie einer solchen Klebstoffraupe beispielsweise im Abstand von 10 mm oder mehr zu der ersten beziehungsweise zweiten Randseite 4 gewählt.

Ein derartiger Klebstoffauftrag kann auch gleichzeitig mit mehreren parallel angeordneten Düsen erfolgen.

Bezüglich einer Abschlusskleberaupe Ka parallel zu einer der zweiten Randseite 4 gegenüberliegenden Randseite kann beispielsweise vorgesehen sein, dass bzgl. dieser einen Kleberaupe auf ein Verfahren parallel zu der ersten Randseite 4 ausgehend von dem entsprechenden Punkt P1 verzichtet ist. Gleiches gilt dann für den Endpunkt, der dem Punkt P3 entspricht.

Die Plattenteile 1 können als Keramik- oder auch als Kunststoff-Plattenteile vorliegen. Diese können im Bereich einer Montagstation M zur einzelnen Aufnahme durch einen Handhabungsautomaten 12 als Vorrat V, gegebenenfalls gestapelt, vorliegen (vergl. schematische Darstellung in Figur 3).

In einem nachfolgenden Verfahrensschritt wird ein solches Plattenteil 1 mit ihrer der Sichtseite 13 gegenüberliegenden Unterseite flächig auf die mit der Klebstofflage 10 versehene Oberseite 3 des Betonsockels 2 zentriert aufgesetzt.

Hierzu kann zunächst ein entsprechend vorgesehener Handhabungsautomat 12 eine Halterungsvorrichtung 14 aufweisen, mittels welcher ein Plattenteil 1 von dem Vorrat V erfasst und transportiert werden kann. Dabei kann die Halterungsvorrichtung 14 eine Grundrissfläche aufweisen, die hinsichtlich ihrer Abmessungen an die Abmessungen des zu halternden Plattenteils 1 im Wesentlichen angepasst sein kann.

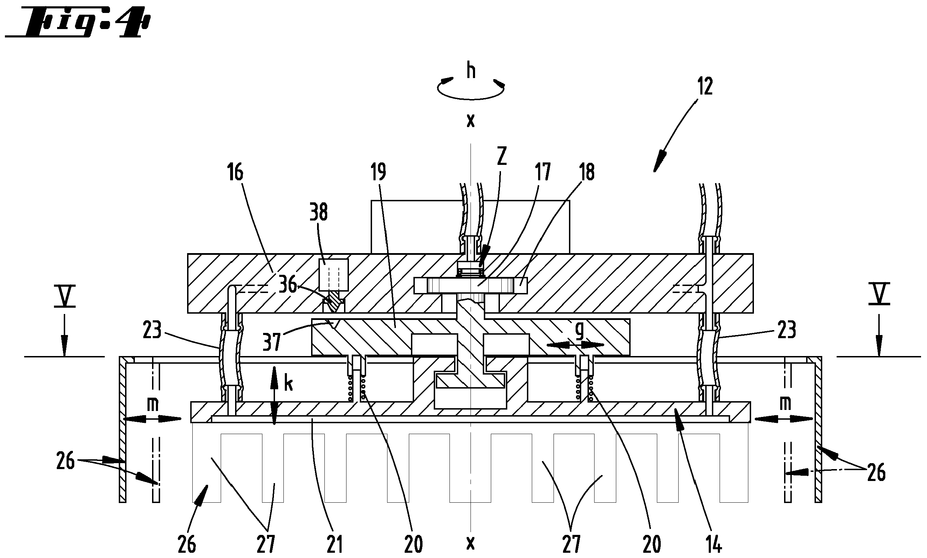

Die Halterungsvorrichtung 14 kann, wie weiter bevorzugt, in Form einer Unterdruck-Halterungsvorrichtung ausgebildet sein, die auslösbar versetzbar an einem Tragkopf 16 des Handhabungsautomaten 12 gehaltert ist. Dabei kann gegenüber dem Tragkopf 16 eine im Wesentlichen horizontale Verschiebbarkeit (Doppelpfeil g) und / oder eine Verdrehbarkeit um eine Vertikalachse x (Doppelpfeil h) der Halterungsvorrichtung 14 gegeben sein. Dies kann weiter beispielsweise durch einen tellerförmigen Halterungsabschnitt 17 mit in einem Grundriss, in welchem sich die Vertikalachse x als Punkt darstellt, kreisrunder Grundfläche erreicht sein, welcher Halterungsabschnitt 17 in einer dem gegenüber durchmesservergrößerten Halterungsaufnahme 18 in dem Tragkopf 16 eingreift (siehe beispielsweise Figur 4).

Die Halterungsvorrichtung 14 ist an einem Tragkopf hierzu beweglich gehaltert, wobei zunächst, beim Aufnehmen des Plattenteils und Transportieren des Plattenteils bis in eine Ausrichtung der Halterungsvorrichtung oberhalb des Betonsockels, mit dem gehalterten Plattenteil in geringem Abstand zu der Oberseite des Betonsockels, starr an den Tragkopf angebunden. Dies beispielsweise durch Verspannung mittels einer Kolben-/Zylinderanordnung Z, die hydraulisch oder pneumatisch beispielsweise betätigt sein kann. Diese starre Verspannung wird bevorzugt dann erst in der genannten Lage, mit der gehalterten Platte in geringem Abstand oberhalb des Betonsockels, zu Verschiebung gelöst.

Zudem kann die Halterungsvorrichtung 14 beziehungsweise die Unterdruck-Halterungsvorrichtung relativ zu einem, starr mit dem Halterungsabschnitt 18 verbundenen Halterungskopf 19 in Axialrichtung verlagerbar sein (siehe Doppelpfeil k). Diese Verlagerbarkeit kann weiter gegebenenfalls gegen die Kraft einer eine Rückstellung in eine axiale Grundausrichtung erbringenden Feder 20 erreicht werden.

Die Halterungsvorrichtung 14 ist bevorzugt mit einem entgegen dem Tragkopf 16 und damit üblicherweise nach unten gerichteten und offenen Unterdruckbereich 21 versehen, welcher über bevorzugt flexible Anschlussschläuche 22 mit einem tragkopfseitigen oder aber auch externen Unterdruckerzeuger, beispielsweise in Form einer Kolbenpumpe oder eines Gebläses, strömungsmäßig in Verbindung steht.

Mittels des Handhabungsautomaten 12 wird zufolge einer ausgelösten Unterdruckbeaufschlagung über die Halterungsvorrichtung 14 ein Plattenteil 1 von dem Vorrat V erfasst und im Unterdruckbereich 21 an der Halterungsvorrichtung 14 gehaltert.

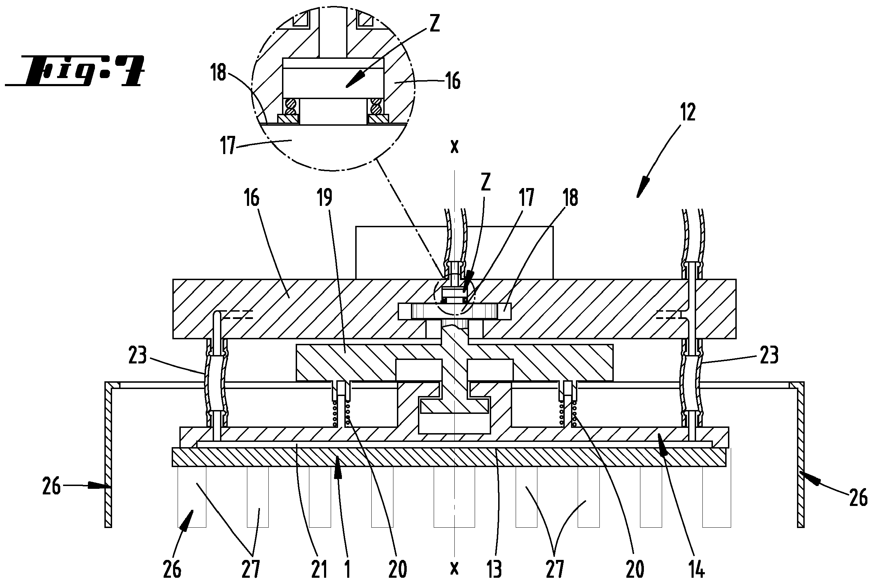

Mit Aufnahme eines Plattenteils 1 von dem Vorrat V kann es vorkommen, wie beispielhaft in Figur 7 dargestellt, dass das Plattenteil 1 beispielsweise durch eine versetzte Ablage des Plattenteils 1 auf einem Vorratsstapel nicht zentriert an der Halterungsvorrichtung 14 gehaltert ist, sondern vielmehr gegenüber der Halterungsvorrichtung 14 zu einer oder zwei Seiten versetzt und / oder um die Vertikalachse x verdreht ist.

Um nunmehr diese zentrierte Halterung des Plattenteils 1 an der Halterungsvorrichtung 14 sicherzustellen, kann ein Zentrierungspodest 15 vorgesehen sein, auf welches das Plattenteil 1, bevorzugt grundsätzlich, zwischengelagert wird. Der Handhabungsautomat 12 verfährt mit dem an der Halterungsvorrichtung 14 gegebenenfalls nicht zentriert gehaltenen Plattenteil 1 zu dem Zentrierungspodest 15 und legt das Plattenteil 1 unter Aufhebung der Unterdruckbeaufschlagung auf diesem ab.

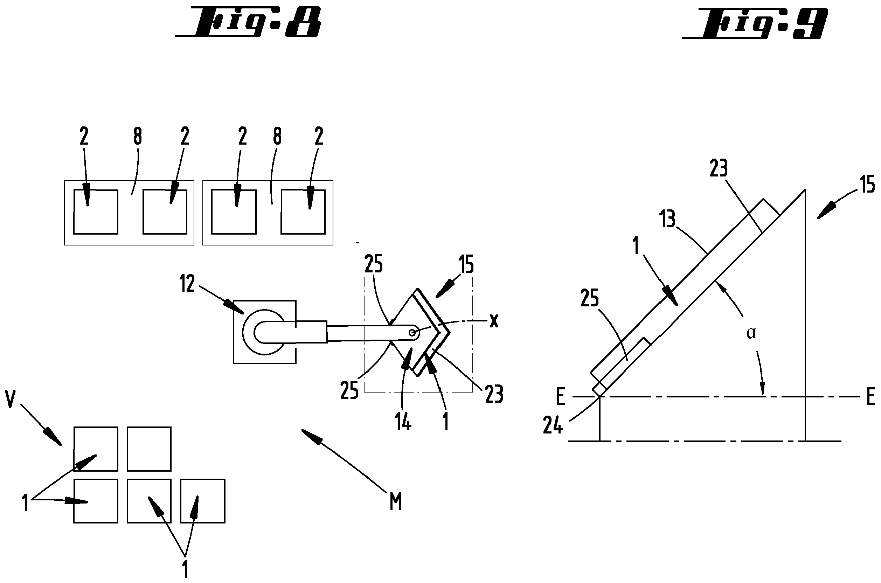

Das Zentrierungspodest 15 weist eine Schrägfläche 23 auf, die zu einer Horizontalebene E einen spitzen Winkel Alpha von beispielsweise etwa 30 bis 45 Grad einschließt (vgl. Figur 9).

Die Schrägfläche 23 weist eine Rechteck- beziehungsweise Quadratkontur auf, mit einer Spitze 24, welche den tiefsten Punkt der Schrägfläche 23 darstellt. Im Bereich dieser Spitze 24 ist die Schrägfläche 23 mit Randbegrenzungen 25 versehen.

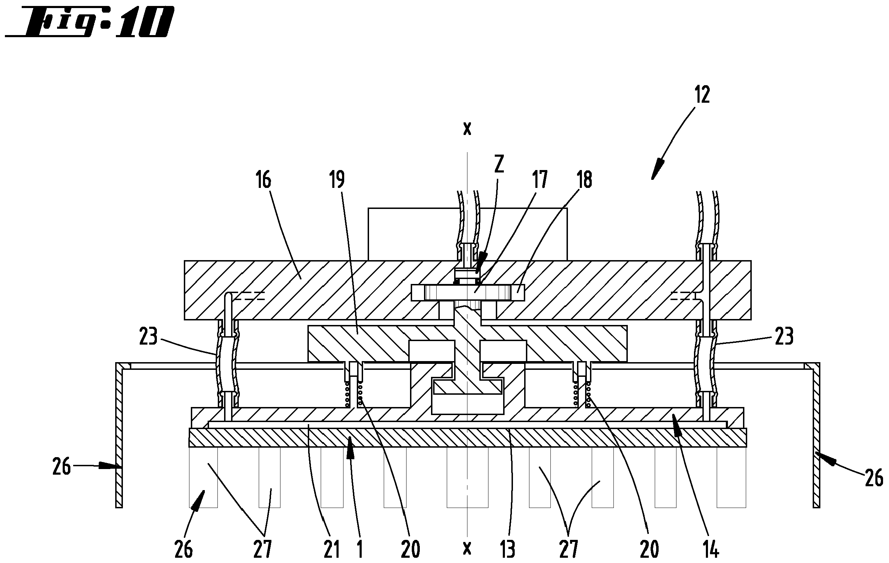

Durch Ablegen des Plattenteil 1 auf der Schrägfläche 23 des Zentrierungspodestes 15 ergibt sich allein schwerkraftabhängig eine (reproduzierbare) definierte Lage und Ausrichtung des Plattenteiles 1, so dass hiernach erneut durch die Halterungsvorrichtung 14 des Handhabungsautomaten 12 das Plattenteil 1 aufgenommen und gehaltert werden kann, wobei dann durch die definierte Zwischenablage eines zentrierte Aufnahme und Halterung sichergestellt ist (vgl. Figur 10).

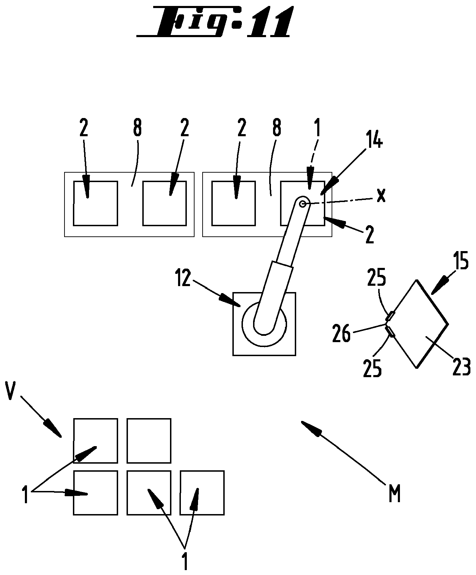

Anschließend erfolgt mittels des Handhabungsautomaten 12 die Überführung des Plattenteils 1 zur Ablage auf dem Betonsockel 2 (siehe Figur 11).

Um auch hier eine zentrierte Anordnung von Plattenteil 1 und Betonsockel 2 herzustellen, ist die Handhabungsvorrichtung 14 mit Anlagefinger 27 aufweisenden Zentrierungsleisten 26 versehen. Bevorzugt sind dabei zwei Paare an Zentrierungsleisten 26 vorgesehen, wobei die Zentrierungsleisten 26 eines Paares bevorzugt gegenüberliegend angeordnet sind.

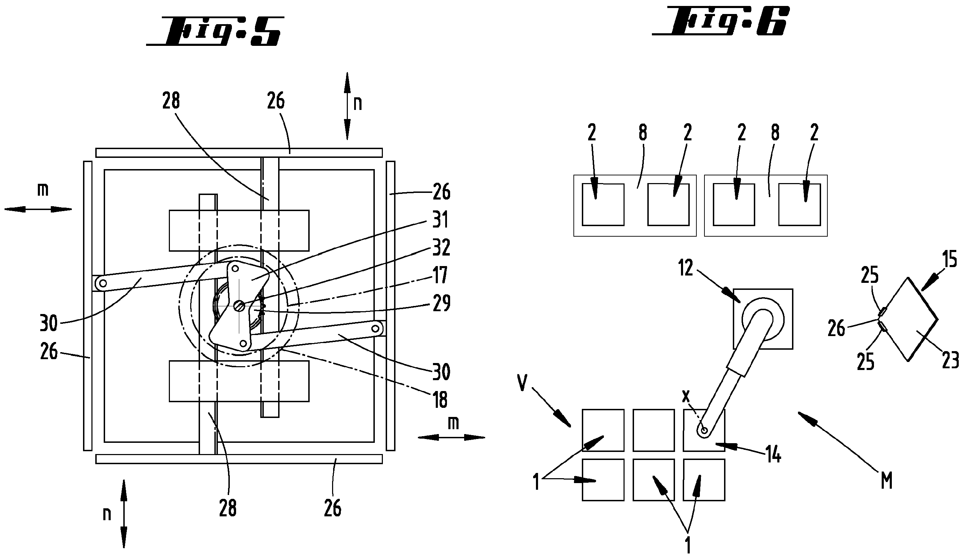

Zumindest die Zentrierungsleisten 26 eines Paares sind miteinander bewegungsgekoppelt, so dass eine synchronisierte Verlagerung der Leisten erreicht werden kann. Wie in Figur 5 schematisch dargestellt können hierzu die Leisten eines Paares über beispielsweise mit einer Verzahnung versehene Schubstangen 28 verfügen, die über einen gemeinsamen zentralen Antrieb 29 synchron linear von außen nach innen und umgekehrt verfahrbar sind. Das weitere Paar an Leisten kann beispielsweise über Lenker 30 und einem zentralen, antreibbaren Stellelement 31 in gleicher Weise wie das andere Paar linear angetrieben werden, wobei deren Verlagerungsrichtung (Doppelpfeil m) senkrecht zu der Verlagerungsrichtung (Doppelpfeil n) des anderen Paares an Leisten erfolgt.

Die Halterungsvorrichtung 14 ist bevorzugt in einem zentralen Bereich, in welcher beispielsweise auch eine Antriebsachse 32 für den Stellantrieb der Zentrierungsleisten 26 verläuft, gehaltert, so dass die Zentrierungsleisten 26 relativ zu der Halterungsvorrichtung 14 verlagerbar sind.

Die Halterungsvorrichtung 14 ist bevorzugt zunächst in einer Grundausrichtung beispielsweise gemäß Figur 10 gehalten, welche Grundstellung weiter beispielweise durch eine auslösbare Rastung oder Kupplung gesichert sein kann.

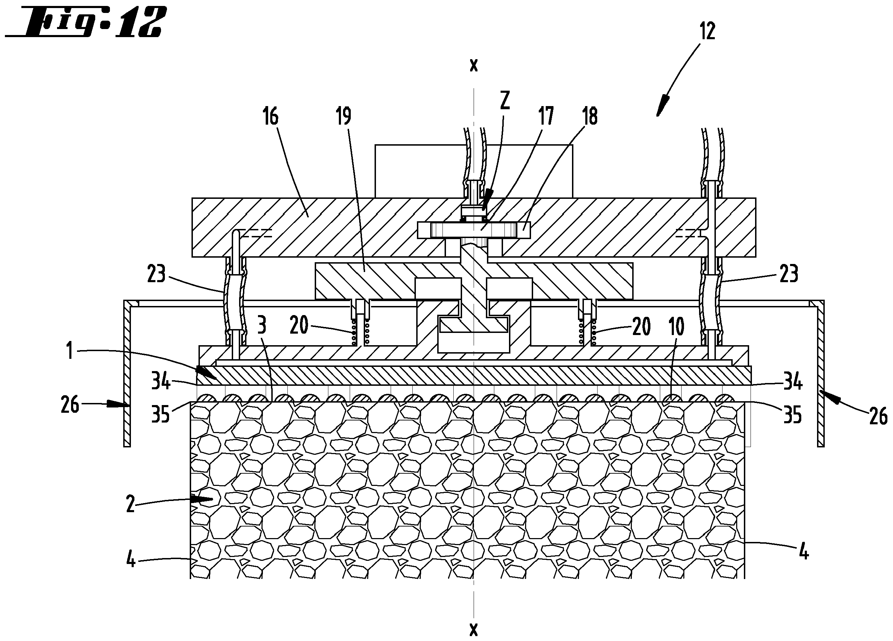

Nach entsprechender Bewegung des Handhabungsautomaten 12 in Richtung auf den Betonsockel 2 und danach erfolgender Absenkbewegung in Richtung auf die mit der Klebstofflage 10 versehenen Oberseite 3, werden die Anlagefinger 27 der Zentrierungsleisten 26 bei entsprechende - senkrecht zu der Vertikalachse x betrachteter - ausgefahrener Stellung nach außen über die Randkanten 35 der Oberseite 3 hinweg nach unten geführt, unter zunächst seitlicher Beabstandung zu den Randseiten 4 des Betonsockels 2 (vgl. Figur 12).

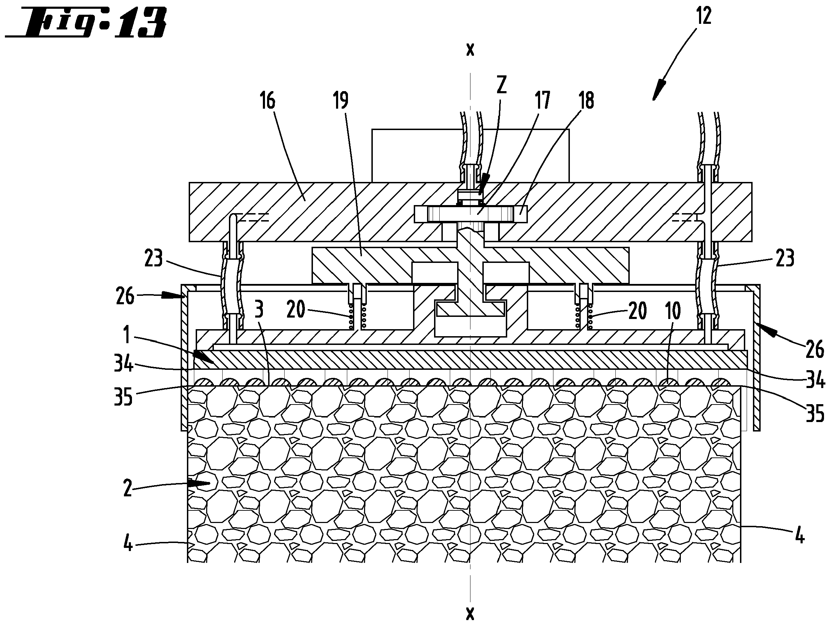

Mit Aktivierung des Antriebs 29 werden die Zentrierungsleisten 26 synchron aufeinander zu verlagert, so dass diese gegen die zugewandte Randseite 4 treten. Dabei kann bei nicht exakter Ausrichtung und Positionierung des Betonsockels 2 auf der Aufnahmeplatte 8 - mit Bezug auf ein Zentrierungsleisten-Paar - gegebenenfalls zunächst nur eine Zentrierungsleiste 26 gemäß der Darstellung in Figur 13 gegen die zugewandte Randseite 4 treten, während die gegenüberliegende Zentrierungsleiste 26 noch mit Abstand zu der dieser zugewandten Randseite 4 ist.

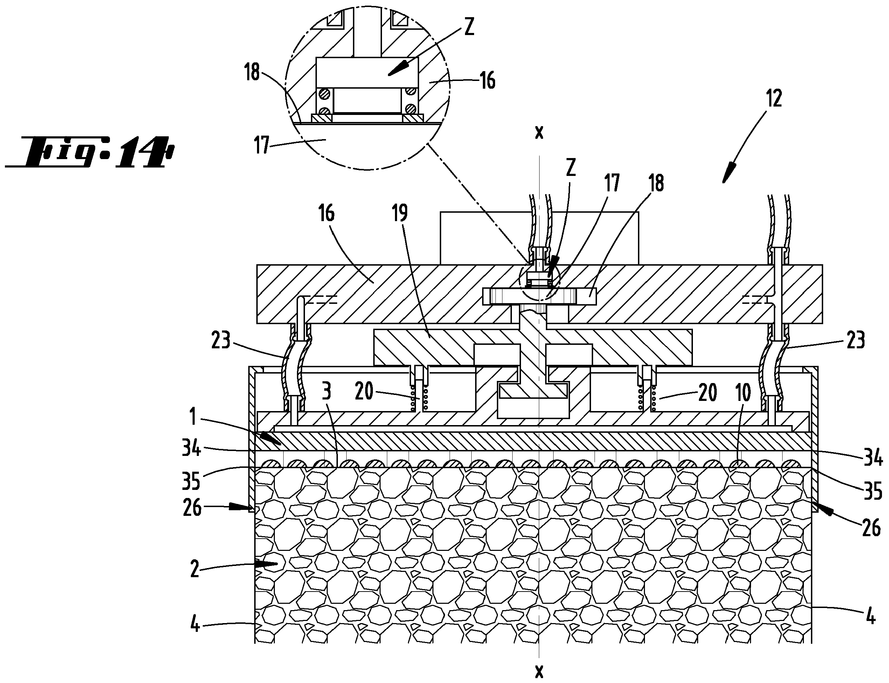

Zufolge Anlage der einen Zentrierungsleiste 26 an der zugeordneten Randseite 4 und weiter gegebenem Antrieb, zieht sich die Halterungsvorrichtung 14 zusammen mit der gegenüberliegenden Zentrierungsleiste 26 in Richtung auf die angeschlagene Leiste, bis die zunächst noch freie Zentrierungsleiste 26 ebenfalls in Anlage zu der zugewandten Randseite 4 des Betonsockels 2 tritt (vgl. Figur 14). Wie ersichtlich ist die Halterungsvorrichtung 14 mit ihrem Halterungsabschnitt 17 in der Halterungsaufnahme 18 des Tragkopfes 16 versetzt.

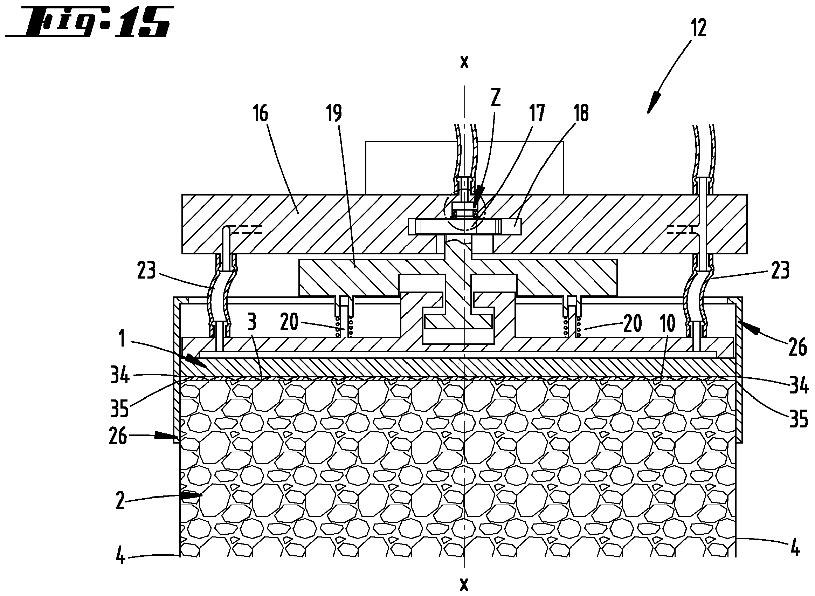

Die Halterungsvorrichtung 16 und somit das zentriert an dieser gehaltene Plattenteil 1 ist nunmehr zentriert zu dem Betonsockel ausgerichtet, so dass durch weiteres Absenken der Halterungsvorrichtung 14 beziehungsweise des gesamten Handhabungsautomaten 12 das Plattenteil 1 nach Aufhebung der Unterdruckbeaufschlagung auf der Klebstofflage 10 abgesetzt werden kann (vgl. Figur 15).

Mit Aufsetzen des Plattenteils 1 auf die Klebstofflage 10 kann gegebenenfalls allein durch das Eigengewicht der Plattenteils 1 eine Vergleichmäßigung der Klebstofflage 10 erfolgen. Der Klebstoff kann hiernach gegebenenfalls bis an die jeweilige Randkante 34, 35 des Betonsockels 2 beziehungsweise des Plattenteils 1 reichen, wie dies schematisch in Figur 17 dargestellt ist.

In den Darstellungen ist die Klebstofflage 10 jeweils übertrieben stark dargestellt.

Nach Aufsetzen des Plattenteils auf die Klebstofflage 10 kann weiter bevorzugt auch eine nochmalige Zentrierung mittels der Zentrierungsleisten 26 erfolgen. Die Zentrierungsleisten 26 befinden sich dann, bei von der Halterungsvorrichtung 16 gelösten und bereits auf den Betonsockel aufliegenden Plattenteil 1, noch in Höhenrichtung in Überdeckung zu den Randseiten 4 des Betonsockels 2 und können dann durch entsprechendes nochmaliges Verfahren wie das aufgelegte Plattenteil 1 ein zweites Mal relativ zu dem Betonsockel 2 durch entsprechendes Verfahren zentrieren.

Eine günstige Klebstoffabbindung ist in bevorzugter Ausgestaltung dadurch erreicht, dass der Klebstoffauftrag, wie bevorzugt auch das Aufsetzen des Plattenteils 1, bei noch nicht vollständig abgebundenem Betonsockel 2 erfolgt. Entsprechend weist der Betonsockel 2 bei einem Aufbringen der Klebstofflage 10 noch einen Feuchtegehalt auf, der die Reaktionseigenschaften des aufgetragenen, silanbasierten Klebstoffs günstig unterstützt.

Die Klebeverbindung zwischen dem Plattenteil 1 und dem Betonsockel 2 kann des Weiteren noch durch einen Anpressvorgang unterstützt werden. Hierzu wirkt beispielsweise ein Stempel 33 flächig auf die Sichtseite 13 des Plattenteils 1 ein, so dass unter Abstützung des Betonsockels 2 beispielsweise auf der Aufnahmeplatte 8 eine Anpresskraft F bevorzugt senkrecht zur Flächenerstreckung der Sichtseite 13 auf den Klebeverbund einwirkt. In alternativer Ausgestaltung kann die Krafteinwirkung auch unter Nutzung des Handhabungsautomaten 12 erreicht werden, weiter gegebenenfalls unter Einwirkung durch die Halterungsvorrichtung 14.

Abschließend kann der Verbund aus Plattenteil 1 und Betonsockel 2 noch einer Trocknungseinrichtung zugeführt werden, beispielsweise einer Trocknungskammer.

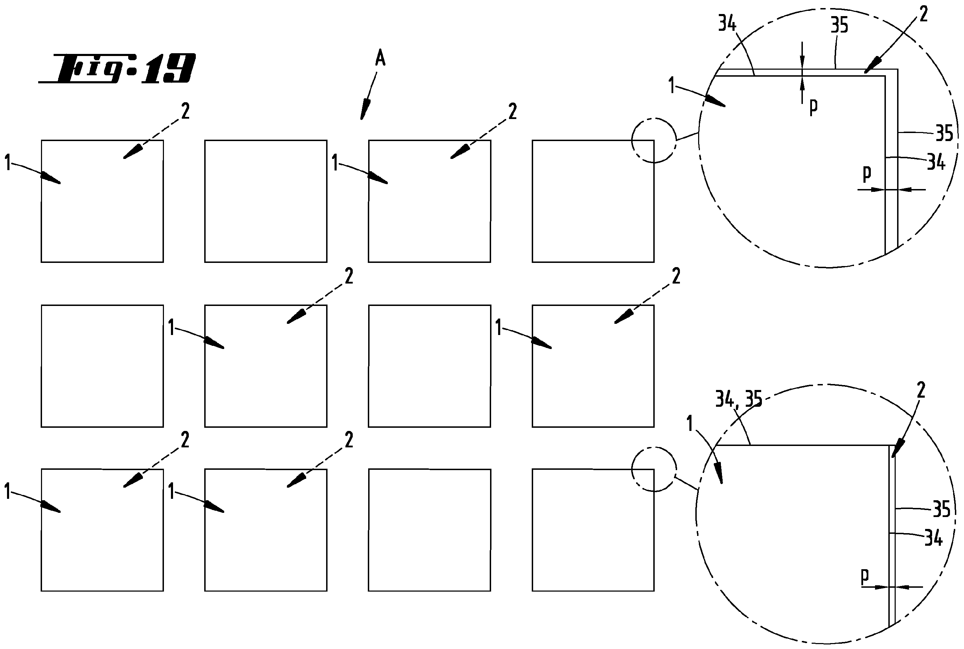

Mittels des beschriebenen Verfahrens ist (auch, aber nicht ausschließlich) unter Nutzung eines Handhabungsautomaten 12 eine unmittelbar aus einer aufeinander erfolgten Produktion herausgegriffene Anzahl A von zehn oder mehr mit Plattenteilen 1 versehenen Betonsockeln 2 serienmäßig herstellbar, bei welchen die Randkanten 34 des zentriert aufsitzenden Plattenteils 1 mit einem umlaufend gleichen beziehungsweise selben rechtwinklig zu den Randseiten 4 betrachteten Abstand p und / oder fluchtend zu den Randkanten 35 des Betonsockels 2 verlaufen, wobei der mögliche Abstand p bevorzugt zwei Millimeter nicht übersteigt (siehe auch die stark vergrößernden Lupendarstellungen in Figur 19).

Dabei ist bevorzugt so viel Klebstoff auf die Oberseite 3 des Betonsockels 2 aufgetragen, dass bei dem ausgehärteten Klebeverbund von Betonsockel 2 und Plattenteil 1 die von dem Plattenteil 1 auf der Oberseite 3 überdeckte Fläche zu 80% oder mehr bedeckt ist, wobei weiter die Dicke d der Klebstofflage 10 bei dem ausgehärteten Klebverbund 5 mm oder weniger, je nach Oberflächenbeschaffenheit insbesondere der Betonsockel-Oberseite 3, aber auch der Plattenteil-Unterseite, bis hin zu Null Millimeter betragen kann.

Hinsichtlich des Tragkopfes 16 und einer Ausrichtung der Halterungsvorrichtung 14 zu dem Tragkopf 16, um wieder eine definierte Ausgangslage für einen folgenden Vorgang des Aufbringens eines Plattenteils auf den Betonsockel zu erreichen, kann, wie in Figur 4 auch schematisch dargestellt, in dem Tragkopf 16 ein Zentrierelement 36 vorgesehen sein, das mit einer Zentrierausnehmung 37 in der Halterungsvorrichtung 14 zusammenwirken kann. Nach Abschluss des Auflegens des Plattenteils auf den Betonsockel kann das Zentrierelement 36, das beispielsweise wie dargestellt vorderseitig, zugeordnet dem Tragkopf 16, keilförmig gebildet sein kann, verfahren werden, beispielsweise elektromotorisch oder durch eine Kolben-/Zylinderanordnung 38, derart, dass es in die Zentrierausnehmung 37 der Halterungsvorrichtung 14 einfährt und dadurch die Halterungsvorrichtung 14 wieder in eine Ausgangsstellung relativ zu dem Tragkopf 16 zentriert.

Es können mehrere derartige Zentriereinrichtungen vorgesehen sein.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Ein Plattenteil 1, das dadurch gekennzeichnet ist, dass der Betonsockel 2 eine Dichte von 0,8 kg/dm³ oder mehr aufweist, wobei die Klebstofflage 10 eine Menge von 400g/m² oder mehr, bis hin zu 1300 g/m², aufweist und wobei weiter der Klebstoff silanmodifiziert ist.

Ein Plattenteil 1, das dadurch gekennzeichnet ist, dass die Klebstofflage 10 die von dem Plattenteil 1 auf dem Betonsockel 2 überdeckte Fläche zu 80% oder mehr bedeckt.

Ein Plattenteil 1, das dadurch gekennzeichnet ist, dass die Klebstofflage 10 eine Dicke d von weniger als 5 mm bis hin zu 0,5 mm aufweist.

Ein Plattenteil 1, das dadurch gekennzeichnet ist, dass das Plattenteil 1 aus einem keramischen Werkstoff oder einem Kunststoffwerkstoff besteht.

Ein Plattenteil 1, das dadurch gekennzeichnet ist, dass das einen rechteckigen oder quadratischen Grundriss aufweisende Plattenteil 1 zentriert auf dem im Grundriss rechteckigen oder quadratischen Betonsockel 2 aufsitzt, derart, dass umlaufend, bei einer Draufsicht, eine fluchtende Ausrichtung der Randkanten 34, 35 des Plattenteils 1 und des Betonsockels 2 gegeben ist oder eine Ausrichtung mit einem umlaufend gleichen / selben Abstand p der Randkanten 34, 35, wobei die Randkanten 34 des Plattenteils 1 gegenüber den Randkanten 35 des Betonsockels 2 zurückversetzt sind.

Eine Anzahl A, die dadurch gekennzeichnet ist, dass das Plattenteil 1 relativ zu dem Betonsockel 2 derart zentriert ist, dass bei allen genannten serienmäßig hergestellten Betonsockeln 2 mit darauf aufsitzenden, klebeverbundenen Plattenteilen 1 ein rechtwinkliger Abstand p zwischen den Randkanten 34, 35 der Plattenteile 1 und der Betonsockel 2 2/10 mm nicht übersteigt.

Eine Anzahl A, die dadurch gekennzeichnet ist, dass die Anzahl A der Plattenteile 1 und Betonsockel 2 aus einer unmittelbar aufeinander erfolgten Produktion herausgegriffen ist.

Ein Verfahren, das dadurch gekennzeichnet ist, dass das Plattenteil 1 mit einem Handhabungsautomaten 12 erfasst wird, derart, dass eine zentrierte Ausrichtung des Plattenteils 1 zu einer Halterungsvorrichtung 14 des Handhabungsautomaten 12 erreicht ist, dass der Betonsockel 2 auf einer verfahrbaren Aufnahmeplatte 8 an einem vorbestimmten Ort der Aufnahmeplatte 8 gebildet wird, dass die Aufnahmeplatte 8 mit dem Betonsockel 2 in eine Montagestellung verfahren wird, in welcher das Plattenteil 1 auf den Betonsockel 2 aufgesetzt wird, und dass weiter die Halterungsvorrichtung 14 des Handhabungsautomaten 12 vor dem Aufsetzen des Plattenteils 1 an der tatsächlichen Position des Betonsockels 2 ausgerichtet wird.

Ein Verfahren, das dadurch gekennzeichnet ist, dass die Halterungsvorrichtung 14 als Unterdruck-Halterungsvorrichtung ausgebildet ist.

Ein Verfahren, das dadurch gekennzeichnet ist, dass die Halterungsvorrichtung 14 auslösbar in dem Handhabungsautomaten 12 relativ zu einem Tragkopf 16 des Handhabungsautomaten 12 horizontal verschiebbar und/oder um eine Vertikalachse x verdrehbar ist.

Ein Verfahren, das dadurch gekennzeichnet ist, dass zwei gegenüberliegende Zentrierungsleisten 26 an der Halterungsvorrichtung 14 angebracht sind, die aufeinander zu bewegbar sind und hierbei durch Anlage an einer oder beiden Randseiten 4 des Betonsockels 2 bei der ausgelösten Verschiebbarkeit und / oder Verdrehbarkeit die Ausrichtung des Plattenteils 1 an der tatsächlichen Position des Betonsockels 2 erbringen lassen.

Ein Verfahren, das dadurch gekennzeichnet ist, dass zwei Paare von Zentrierungsleisten 26 vorgesehen sind, die senkrecht zueinander bewegbar sind.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkenden Mittel ersetzt werden können.

**Liste der Bezugszeichen**

| | | | |
|---|---|---|---|
| 1 | Keramikplatte | 29 | Antrieb |
| 2 | Betonsockel | 30 | Lenker |
| 3 | Oberseite | 31 | Stellelement |
| 4 | Randseite | 32 | Antriebsachse |
| 5 | Form | 33 | Stempel |
| 6 | Beton | 34 | Randkante |
| 7 | Klopfeinrichtung | 35 | Randkante |
| 8 | Aufnahmeplatte | 36 | Zentrierelement |
| 9 | Klebstoffauftragseinrichtung | 37 | Zentrierausnehmung |
| 10 | Klebstofflage | 38 | Kolben-/Zylinderanordnung |
| 11 | Rand | | |
| 12 | Handhabungsautomat | a | Kantenlänge |
| 13 | Sichtseite | b | Kantenlänge |
| 14 | Halterungsvorrichtung | c | Abstand |
| 15 | Zentrierungspodest | d | Dicke |
| 16 | Tragkopf | e | Breite |
| 17 | Halterungsabschnitt | f | Abstand |
| 18 | Halterungsaufnahme | g | Doppelpfeil |
| 19 | Halterungskopf | h | Doppelpfeil |
| 20 | Feder | k | Doppelpfeil |
| 21 | Unterdruckbereich | m | Doppelpfeil |
| 22 | Schlauch | n | Doppelpfeil |
| 23 | Schrägfläche | p | Abstand |
| 24 | Spitze | r | Pfeil |
| 25 | Randbegrenzung | | |
| 26 | Zentrierungsleiste | A | Anzahl |
| 27 | Anlagefinger | E | Horizontalebene |
| 28 | Schubstange | F | Anpresskraft |
| Ka | Abschlusskleberaupe | V | Vorrat |
| M | Montagestation | Z | Kolben-/Zylinderanordnung |
| P1 | Punkt | | |
| P2 | Punkt | α | Winkel |
| P3 | Punkt | | |
| P4 | Punkt | | |
| P5 | Punkt | | |
| P6 | Punkt | | |
| P7 | Punkt | | |

## Patentansprüche

1. Auf einem verdichteten Betonsockel (2) klebeverbunden aufsitzendes Plattenteil (1), **dadurch gekennzeichnet, dass** der Betonsockel (2) eine Dichte von 0,8 kg/dm³ oder mehr aufweist, wobei die Klebstofflage (10) eine Menge von 400g/m² oder mehr, bis hin zu 1300 g/m², aufweist und wobei weiter der Klebstoff silanmodifiziert ist.

2. Plattenteil nach Anspruch 1, **dadurch gekennzeichnet, dass** die Klebstofflage (10) die von dem Plattenteil (1) auf dem Betonsockel (2) überdeckte Fläche zu 80% oder mehr bedeckt.

3. Plattenteil nach einem der vorhergehenden Ansprüche, **dadurch gekennzeichnet, dass** die Klebstofflage (10) eine Dicke (d) von weniger als 5 mm bis hin zu 0,5 mm aufweist.

4. Plattenteil nach einem der vorhergehenden Ansprüche, **dadurch gekennzeichnet, dass** das Plattenteil (1) aus einem keramischen Werkstoff oder einem Kunststoffwerkstoff besteht.

5. Plattenteil nach einem der vorhergehenden Ansprüche, **dadurch gekennzeichnet, dass** das einen rechteckigen oder quadratischen Grundriss aufweisende Plattenteil (1) zentriert auf dem im Grundriss rechteckigen oder quadratischen Betonsockel (2) aufsitzt, derart, dass umlaufend, bei einer Draufsicht, eine fluchtende Ausrichtung der Randkanten (34, 35) des Plattenteils (1) und des Betonsockels (2) gegeben ist oder eine Ausrichtung mit einem umlaufend gleichen / selben Abstand (p) der Randkanten (34, 35), wobei die Randkanten (34) des Plattenteils (1) gegenüber den Randkanten (35) des Betonsockels (2) zurückversetzt sind.

6. Eine Anzahl (A) von zehn oder mehr serienmäßig hergestellten Betonsockeln (2) mit darauf aufsitzenden, klebeverbundenen Plattenteilen (1), insbesondere auf verdichteten Betonsockeln (2) klebeverbunden aufsitzende Plattenteile (1) nach einem der Ansprüche 1 bis 5, **dadurch gekennzeichnet, dass** das Plattenteil (1) relativ zu dem Betonsockel (2) derart zentriert ist, dass bei allen genannten serienmäßig hergestellten Betonsockeln (2) mit darauf aufsitzenden, klebeverbundenen Plattenteilen (1) ein rechtwinkliger Abstand (p) zwischen den Randkanten (34, 35) der Plattenteile (1) und der Betonsockel (2) 2/10 mm nicht übersteigt.

7. Anzahl nach Anspruch 6, **dadurch gekennzeichnet, dass** die Anzahl (A) der Plattenteile (1) und Betonsockel (2) aus einer unmittelbar aufeinander erfolgten Produktion herausgegriffen ist.

8. Verfahren zur Herstellung eines mit einem Plattenteil (1) klebeverbundenen Betonsockels (2), wobei zunächst der Betonsockel (2) mit einer Oberseite (3), einer Unterseite und Randseiten (4) hergestellt wird, sodann auf die Oberseite (3) des Betonsockels (2) Klebstoff aufgebracht wird und hiernach das Plattenteil (1) zentriert auf den Betonsockel (2) aufgesetzt wird, wobei eine individuelle Zentrierung jedes Plattenteils (1) an jedem Betonsockel (2) vorgenommen wird, **dadurch gekennzeichnet, dass** das Plattenteil (1) mit einem Handhabungsautomaten (12) erfasst wird, derart, dass eine zentrierte Ausrichtung des Plattenteils (1) zu einer Halterungsvorrichtung (14) des Handhabungsautomaten (12) erreicht ist, dass der Betonsockel (2) auf einer verfahrbaren Aufnahmeplatte (8) an einem vorbestimmten Ort der Aufnahmeplatte (8) gebildet wird, dass die Aufnahmeplatte (8) mit dem Betonsockel (2) in eine Montagestellung verfahren wird, in welcher das Plattenteil (1) auf den Betonsockel (2) aufgesetzt wird, und dass weiter die Halterungsvorrichtung (14) des Handhabungsautomaten (12) vor dem Aufsetzen des Plattenteils (1) an der tatsächlichen Position des Betonsockels (2) ausgerichtet wird.

9. Verfahren nach Anspruch 8, **dadurch gekennzeichnet, dass** die Halterungsvorrichtung (14) als Unterdruck-Halterungsvorrichtung ausgebildet ist.

10. Verfahren nach einem der Ansprüche 8 oder 9, **dadurch gekennzeichnet, dass** die Halterungsvorrichtung (14) auslösbar in dem Handhabungsautomaten (12) relativ zu einem Tragkopf (16) des Handhabungsautomaten (12) horizontal verschiebbar und/oder um eine Vertikalachse (x) verdrehbar ist.

11. Verfahren nach einem der Ansprüche 8 bis 10, **dadurch gekennzeichnet, dass** zwei gegenüberliegende Zentrierungsleisten (26) an der Halterungsvorrichtung (14) angebracht sind, die aufeinander zu bewegbar sind und hierbei durch Anlage an einer oder beiden Randseiten (4) des Betonsockels (2) bei der ausgelösten Verschiebbarkeit und / oder Verdrehbarkeit die Ausrichtung des Plattenteils (1) an der tatsächlichen Position des Betonsockels (2) erbringen lassen.

12. Verfahren nach einem der Ansprüche 8 bis 11, **dadurch gekennzeichnet, dass** zwei Paare von Zentrierungsleisten (26) vorgesehen sind, die senkrecht zueinander bewegbar sind.
